(19) Europäisches Patentamt
European Patent Office
Office européen des brevets

(11) **EP 2 257 372 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(21) Anmeldenummer: **09725694.5**

(22) Anmeldetag: **10.03.2009**

(51) Int Cl.:
*B01J 23/46* (2006.01)     *B01J 38/02* (2006.01)
*B01J 38/42* (2006.01)     *C01B 7/04* (2006.01)

(86) Internationale Anmeldenummer:
**PCT/EP2009/001689**

(87) Internationale Veröffentlichungsnummer:
**WO 2009/118095 (01.10.2009 Gazette 2009/40)**

(54) **VERFAHREN ZUR REGENERATION EINES MIT SCHWEFEL IN FORM VON SCHWEFELVERBINDUNGEN VERGIFTETEN, RUTHENIUM ODER RUTHENIUMVERBINDUNGEN ENTHALTENDEN KATALYSATORS**

METHOD FOR REGENERATING A RUTHENIUM- OR RUTHENIUM COMPOUND-CONTAINING CATALYST WHICH IS CONTAMINATED WITH SULFUR IN THE FORM OF SULFUR COMPOUNDS

PROCÉDÉ DE RÉGÉNÉRATION D'UN CATALYSEUR CONTENANT DU RUTHÉNIUM OU DES COMPOSÉS DE RUTHÉNIUM CONTAMINÉS PAR DU SOUFRE SOUS FORME DE COMPOSÉS DE SOUFRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.03.2008 DE 102008015406**

(43) Veröffentlichungstag der Anmeldung:
**08.12.2010 Patentblatt 2010/49**

(73) Patentinhaber: **Bayer MaterialScience AG**
**51368 Leverkusen (DE)**

(72) Erfinder:
• **SCHMIDT, Timm**
**41472 Neuss (DE)**
• **LODDENKEMPER, Tim**
**41542 Dormagen (DE)**
• **GERHARTZ, Frank**
**51381 Leverkusen (DE)**
• **MÜLLER, Walther**
**50259 Pulheim (DE)**

(74) Vertreter: **Klimiuk, Meike**
**Bayer MaterialScience AG**
**Law & Patents**
**Patents & Licensing**
**D-51368 Leverkusen (DE)**

(56) Entgegenhaltungen:
EP-A- 0 535 619     EP-A- 0 743 277
WO-A-2007/134721     US-A- 4 072 628

EP 2 257 372 B1

## Beschreibung

Die Reaktion mit Schwefelverbindungen führt bei Ruthenium oder Rutheniumverbindungen enthaltenden Katalysatoren bei vielen typischen Anwendungen zu einer irreversiblen Reduzierung der Aktivität, die nach gängiger Meinung auf eine Vergiftung zurückzuführen ist. Die vorliegende Erfindung betrifft ein Verfahren, mit dem der Schwefelgehalt eines mit Schwefel in Form von Schwefelverbindungen vergifteten, Ruthenium oder Rutheniumverbindungen enthaltenden Katalysators durch eine gezielte Behandlung mit einem Chlorwasserstoff enthaltenden Strom unter nicht oxidativen Bedingungen soweit reduziert werden kann, dass dessen Aktivität auf die Aktivität eines gleichartigen Katalysators ansteigt, der nicht mit Schwefel in Form von Schwefelverbindungen vergiftet ist. Der Erfolg dieser Regeneration wird am Beispiel der katalytischen Oxidation von Chlorwasserstoff mit Sauerstoff und an der Oxidation von Kohlenstoffmonoxid mit Sauerstoff demonstriert.

Ein typisches Anwendungsgebiet für einen Ruthenium oder Rutheniumverbindungen enthaltenden Katalysator ist die Herstellung von Chlor durch Gasphasenoxidation von Chlorwasserstoff mit Sauerstoff:

$$4\ HCl\ +\ O_2\ \Rightarrow\ 2\ Cl_2\ +\ 2\ H_2O$$

Diese Reaktion ist eine Gleichgewichtsreaktion. Die Lage des Gleichgewichts verschiebt sich mit zunehmender Temperatur zu Ungunsten des gewünschten Endproduktes. Es ist daher vorteilhaft, Katalysatoren mit möglichst hoher Aktivität einzusetzen, die die Reaktion bei niedriger Temperatur ablaufen lassen.

Erste Katalysatoren für die Chlorwasserstoffoxidation enthielten als aktive Komponente Kupferchlorid bzw. -oxid und wurden schon 1868 von Deacon beschrieben. Diese wiesen jedoch bei niedriger Temperatur (< 400°C) nur geringe Aktivitäten auf. Durch eine Erhöhung der Reaktionstemperatur konnte zwar deren Aktivität gesteigert werden, nachteilig war jedoch, dass die Flüchtigkeit der Aktivkomponenten zu einer schnellen Deaktivierung führte.

Da bis in die 60-er Jahre des 20-ten Jahrhunderts trotz immenser Forschungsaktivitäten auf diesem Gebiet keine wesentlichen Fortschritte erzielt werden konnten, wurde das nach dem Entdecker benannte Deacon-Verfahren durch die Chloralkalielektrolyse in den Hintergrund gedrängt. Bis in die 90er Jahre erfolgte nahezu die gesamte Produktion von Chlor durch Elektrolyse wässriger Kochsalzlösungen [Ullmann Encyclopedia of industrial chemistry, seventh release, 2006]. Da der weltweite Chlorbedarf jedoch aktuell stärker wächst als die Nachfrage nach Natronlauge, ist die Attraktivität des Deacon-Verfahrens ungebrochen, da hierdurch Chlorwasserstoff für die Herstellung von Chlor wiederverwertet werden kann, welcher in großen Mengen beispielsweise bei der Phosgenierung von Aminen als Koppelprodukt anfällt.

Ein wesentlicher Fortschritt auf dem Gebiet der Chlorwasserstoffoxidation wurde durch die Entdeckung von Ruthenium bzw. Rutheniumverbindungen als katalytisch aktive Komponenten erzielt, welche zum ersten Mal 1965 in DE 1567788 beschrieben wurden. Insbesondere bei der Bereitstellung eines geeigneten Trägers wurden seitdem große Fortschritte erzielt. Als Träger besonders geeignet scheint Titandioxid, dessen Anwendung beispielsweise in der Anmeldung EP 743277 A1 beschrieben wird und Zinndioxid, dessen Anwendung beispielsweise aus der Anmeldung DE 10 2006 024 543 A1 ersichtlich ist.

Weitere typische Anwendungsgebiete für Ruthenium oder Rutheniumverbindungen enthaltende Katalysatoren sind die (selektive) Oxidation von Kohlenstoffmonoxid und die Abluftreinigung. US 7 247 592 B2 beschreibt einen Ruthenium bzw. Rutheniumverbindungen enthaltenden Katalysator für die selektive Oxidation von Kohlenstoffmonoxid. Aus US 7 318 915 B2 ist die Anwendung von Ruthenium bzw. Rutheniumverbindungen enthaltenden Katalysatoren für den kombinierten Einsatz im Bereich der Abluftbehandlung bekannt. Dabei oxidiert der beschriebene Katalysator Kohlenstoffmonoxid und flüchtige Kohlenwasserstoffe, während nitrose Gase gleichsam reduziert werden.

Es ist noch eine Vielzahl von weiteren Anwendungen für Ruthenium oder Rutheniumverbindungen enthaltende Katalysatoren bekannt. Insbesondere bei der Synthese von organischen Grundstoffen aus Erdölfraktionen, Erdgas oder Kohle nehmen Ruthenium oder Rutheniumverbindungen enthaltende Katalysatoren oft eine Schlüsselrolle ein.

Ein großes Problem beim Einsatz von Ruthenium oder Rutheniumverbindungen enthaltenden Katalysatoren ist offensichtlich deren Sensibilität gegenüber einer Vergiftung mit Schwefel. Eine Schwefelfracht im Eingangsstrom kann z. B. durch Schwefel enthaltende Rohstoffe (z.B. Erdölfraktionen, Erdgas, Kohle) oder vorgelagerte Prozesse (z.B. Gastrocknung mit Schwefelsäure, schwefelhaltige Aktivkohle) aufgeprägt sein. Aus WO 2007 066 810 A1 ist z. B. bekannt, dass es für die Standzeit eines Ruthenium bzw. Rutheniumverbindungen enthaltenden Katalysators für die Chlorwasserstoffoxidation von entscheidender Bedeutung ist, die Schwefelfracht im Eingangsstrom auf unter 2 ppm abzusenken. Zur Reduzierung der Schwefelfracht werden in dieser Anmeldung diverse Oxide beschrieben, an denen Schwefelkomponenten reaktiv abgeschieden werden. Ein Nachteil dieses Verfahrens ist, dass flüchtige Chloride dieser Elemente auf den Katalysator verschleppt werden können oder eine Spitzenbelastung in der Schwefelfracht zu einem Durchbruch von Schwefelverbindungen führen kann.

Es wurden schon Verfahren zur Regeneration von mit Schwefel in Form von Schwefelverbindungen vergifteten, Ruthenium bzw. Rutheniumverbindungen enthaltenden Katalysatoren beschrieben, die jedoch mit vielerlei Nachteilen behaftet sind. Aus GB 744 049 A ist bekannt, dass mit Schwefel in Form von Schwefelverbindungen vergiftete, Ruthenium bzw. Rutheniumverbindungen enthaltende Katalysatoren durch eine Wäsche regeneriert werden können. Als Beispiele für die Waschflüssigkeit werden Wasser, Ethanol, Essigsäure, Cyclohexen, Benzol und Aceton genannt. Eine Wäsche birgt jedoch immer das Risiko, dass ein Teil der Aktivkomponenten mit der Waschflüssigkeit ausgetragen wird. Dies kann sowohl durch chemisch-physikalische Prozesse (z. B. Reaktion + Absorption, Löslichkeit) als auch durch mechanische Prozesse (z. B. Abrieb) geschehen. Des Weiteren muss der Katalysator für eine Wäsche im Regelfall aus dem für die Zielreaktion eingesetzten Reaktor ausgebaut werden.

GB 1 278 119 A beschreibt die Regeneration eines mit Schwefel in Form von Schwefelverbindungen vergifteten, Ruthenium bzw. Rutheniumverbindungen enthaltenden Katalysators durch eine reduzierende Behandlung mit einem wasserfreien Wasserstoffstrom bei 430 bis 595°C, einem Druck zwischen 3 und 24 bar und einigen weiteren Oxidations- und Reduktionsschritten. Eine derartige Kombination aus reduzierenden Bedingungen und hohen Temperaturen wird zu einer weitgehenden Reduktion von Rutheniumoxiden (sofern vorher vorhanden) zu metallischem Ruthenium bis in tiefere Schichten führen. Durch diese Behandlung wird der Ruthenium bzw. Rutheniumverbindungen enthaltende Katalysator drastischen Veränderungen unterworfen sein, die für manche Anwendungen womöglich unerwünscht sind. Auch müssen für diese Anwendung druckfeste Reaktoren, Rohrleitungen und Armaturen zur Verfügung stehen, weshalb der Katalysator für diese Behandlung im Regelfall ausgebaut werden müsste.

Es ist demzufolge noch kein einfach zu handhabendes Verfahren entwickelt worden, mit dem die Regeneration eines mit Schwefel in Form von Schwefelverbindungen vergifteten, Ruthenium oder Rutheniumverbindungen enthaltenden Katalysators unter milden Bedingungen möglich ist. Die bisher bekannten Verfahren bergen alle das Risiko eines partiellen Verlustes von Ruthenium oder einer unerwünschten Veränderung der Katalysatorstruktur. Demzufolge ist eine schleichende Vergiftung eines Ruthenium oder Rutheniumverbindungen enthaltenden Katalysators durch Schwefel in Form von Schwefelverbindungen bei vielen Verfahren immer noch ein begrenzender Faktor für die Laufzeit. Ein schlagartiger, irreversibler Aktivitätsverlust durch einen ungewollten Peak in der Schwefelfracht (z.B. aufgrund instationärer Anfahrprozesse) stellt ein Worst-Case Szenario dar. Beide Faktoren bergen ein enormes wirtschaftliches Risiko, da die Wiedergewinnung des Rutheniums von einem gebrauchten, Katalysator aufwändig ist und ein partieller Ruthenium-Verlust einkalkuliert werden muss.

Die Aufgabe dieser Erfindung ist es somit ein effektives, schonendes und einfaches Verfahren zur Regeneration eines mit Schwefel in Form von Schwefelverbindungen vergifteten, Ruthenium oder Rutheniumverbindungen enthaltenden Katalysators bereitzustellen.

Überraschenderweise wurde gefunden, dass der Schwefelgehalt eines mit Schwefel in Form von Schwefelverbindungen vergifteten, Ruthenium oder Rutheniumverbindungen enthaltenden Katalysators durch eine gezielte Behandlung mit einem Halogenwasserstoff, insbesondere Chlorwasserstoff enthaltenden Gasstroms unter nicht oxidativen Bedingungen bei gegebenenfalls erhöhter Temperatur soweit reduziert werden kann, dass dessen Aktivität auf die Aktivität eines gleichartigen Katalysators ansteigt, der nicht mit Schwefel in Form von Schwefelverbindungen vergiftet wurde.

Gegenstand der Erfindung ist ein Verfahren zur Regeneration eines Ruthenium oder Rutheniumverbindungen enthaltenden Katalysators, der durch Schwefel in Form von Schwefelverbindungen vergiftet ist, dadurch gekennzeichnet, dass man den Katalysator gegebenenfalls bei erhöhter Temperatur einer Behandlung mit einem Halogenwasserstoff, insbesondere Chlorwasserstoff enthaltenden Gasstrom unter nicht oxidativen Bedingungen unterzieht.

In den folgenden Abschnitten wird die Wortwendung "Regeneration eines mit Schwefel vergifteten, Ruthenium oder Rutheniumverbindungen enthaltenden Katalysators" auch verkürzt als Katalysatorregeneration, Regeneration oder mit ähnlichen Wortwendungen beschrieben. Die erfindungsgemäße Anwendung kann bei der Regeneration von Katalysatoren sowohl auf Basis von Rutheniummetall als auch von Rutheniumverbindungen eingesetzt werden. Bevorzugte Rutheniumverbindungen sind Rutheniumhalogenide, insbesondere Rutheniumchloride, Rutheniumoxidhalogenide, insbesondere Rutheniumoxidchloride, oder Rutheniumoxide die einzeln oder in Mischung vorliegen können. Hierbei wird zur Regeneration der Chlor enthaltenden Rutheniumverbindungen bevorzugt Chlorwasserstoff zur Regeneration benützt.

Ein Katalysator gilt insbesondere dann als vergiftet im Sinne der Erfindung wenn seine Aktivität, gemessen am Umsatz des mit Schwefel in Form von Schwefelverbindungen vergifteten Ruthenium oder Rutheniumverbindungen enthaltenden Katalysators (Betriebskatalysator) im differentiellen Umsatzbereich der katalysierten Reaktion (Umsatz <= 10%) insbesondere um mindestens 5%, bevorzugt um mindestens 10%, besonders bevorzugt um mindestens 20% gesunken ist. In einer möglichen bevorzugten Ausführung wird zur Bestimmung des Aktivitätsverlusts ein kleiner Seitenstrom vom einzuspeisenden Hauptstrom abgetrennt und über ein separates Katalysatorbett mit dem selben Katalysatormaterial geführt, bei dem durch geeignete Wahl der Kontaktzeit ein differentiellen Umsatz erzielt wird. In einer möglichen bevorzugten Ausführung wird ein kleiner Teil des eingesetzten Ruthenium oder Rutheniumverbindungen enthaltenden Katalysators (Betriebskatalysator) aus dem Reaktor entnommen in ein separates Katalysatorbett überführt und mittels einer Modellreaktion durch geeignete Wahl der Kontaktzeit der Aktivitätsverlustes im differentiellen Umsatzbereich ermittelt. Schwefelverbindungen, die Ruthenium oder Rutheniumverbindungen enthaltende Katalysatoren vergiften (deaktivieren) können sind bevorzugt eine oder mehrere Verbindungen ausgewählt aus der Reihe: $H_2SO_4$, $H_2SO_3$, $SO_3$, $SO_2$, COS, $H_2S$, sowie Salze von $H_2SO_4$ und $H_2SO_3$. Durch die Reaktion mit der Katalysatoroberfläche werden diese Schwefelverbindungen unter oxidativen Bedingungen bevorzugt in Schwefeloxide überführt, die in die Katalysatoroberfläche bevorzugt über Brückensauerstoff oder Schwefel-Metall-Bindungen eingebaut werden. Unter reduzierenden Bedingungen wird der Schwefel bevorzugt über Schwefel-Metall-Bindungen in die Katalysatoroberfläche eingebaut. Durch das erfindungsgemäße Verfahren kann der durch die Reaktion an der Katalysatoroberfläche immobilisierter Schwefel in Form von Schwefelverbindungen wieder in flüchtige Schwefelverbindungen überführt werden, die von der Katalysatoroberfläche entfernt werden können.

Die Regeneration wird insbesondere bei einer Temperatur bis 600°C durchgeführt. In einer bevorzugten Ausführung wird die Regeneration bei einer Temperatur von 200°C bis 500°C durchgeführt, in einer besonders bevorzugten Ausführung bei einer Temperatur von 300°C bis 450°C.

Der Regenerationsstrom enthält Halogenwasserstoff, bevorzugt Chlorwasserstoff, wobei der Halogenwasserstoffgehalt bevorzugt 0,1 bis 100 Vol.-% beträgt. In einer bevorzugten Ausführung beträgt der Halogenwasserstoffgehalt des Regenerationsstroms 1 bis 30 Vol.-%, besonders bevorzugt 5 bis 25 Vol.-%. Weitere Bestandteile des Regenerationsstroms können insbesondere Inertgase, wie z.B. Stickstoff oder Argon sein. Der elementare Halogenwasserstoff kann auch durch Substanzen bzw. Substanzmischungen ersetzt werden, die Halogenwasserstoff, d.h. insbesondere Chlor-, Fluor-, Brom-, oder Iodwasserstoff unter den beschriebenen Regenerationsbedingungen freisetzen oder Substanzen bzw. Substanzmischungen, deren Wasserstoff- und Halogenfunktionen eine vergleichbare Wirkung wie elementarer Halogenwasserstoff unter den beschriebenen Regenerationsbedingungen erzielen. Beispielhaft wird hier Phosgen erwähnt.

Der Regenerationsgasstrom enthält nur einen geringen Anteil von Sauerstoff, d.h. insbesondere höchstens 1 Vol.-%, bevorzugt höchstens 0,2 Vol.-%, besonders bevorzugt höchstens 0,1 Vol.-% Sauerstoff. In einer besonders bevorzugten Ausführung enthält der Regenerationsstrom keinen Sauerstoff.

Erfahrungsgemäß enthalten die aufgeführten zur Regeneration verwendbaren Gase technisch bedingt oft Verunreinigungen (in der Größenordnung <1000 ppm), z.B. Chlor und Wasser deren Anwesenheit nicht nachteilig für die Regeneration ist. Störende Verunreinigungen (z.B. Schwefel in Form von Schwefelverbindungen oder Sauerstoff) sind sinnvollerweise aus dem Regenerationsgas zuvor zu entfernen.

Die Regenerationsdauer beträgt bevorzugt 0,5 Stunden bis 100 Stunden. Bei einer unnötig langen Regenerationsdauer kann der Rutheniumgehalt des Katalysators durch die Bildung flüchtiger Rutheniumverbindungen ungewollt herabgesetzt werden. Die optimale Regenerationsdauer hängt insbesondere von der Schwefelbeladung, von der Regenerationstemperatur und von dem Gehalt an Chlorwasserstoff im Regenerationsstrom ab. Die Regeneration kann entweder in einem Schritt oder in mehreren Intervallen erfolgen. Bevorzugt erfolgt die Regeneration intervallweise, wobei zwischen den Zeitintervallen der Schwefelgehalt und/oder die Aktivität des Katalysators bestimmt werden.

In einer besonders bevorzugten Ausführung verbleibt der Katalysator während der Regeration in dem Reaktor, in dem auch die katalytische Zielreaktion durchgeführt wird. In einer möglichen bevorzugten Ausführung dieser Variante wird die Regeneration im Gegenstrom zur normalen Strömungsrichtung durchgeführt, um eine Verschleppung von ausgetragenen Schwefelkomponenten auf schwach oder unvergiftete Katalysatorschichten zu vermeiden.

Eine bevorzugte Anwendung ist die Regeneration von Ruthenium oder Rutheniumverbindungen enthaltenden Katalysatoren für die katalysierte Gasphasenoxidation von Chlorwasserstoff mit Sauerstoff, da hierbei die erforderliche apparative Umgebung zum Umgang mit Chlorwasserstoff schon vorhanden ist und der Katalysator auch während der Reaktion einer Chlorwasserstoffatmosphäre standhalten muss.

Eine bevorzugte Anwendung ist die Regeneration von Katalysatoren deren Aktivkomponente hauptsächlich aus geträgertem Ruthenium oder Rutheniumverbindungen besteht. Eine besonders bevorzugte Anwendung ist die Regeneration von Ruthenium oder Rutheniumverbindungen enthaltenden Katalysatoren, deren Träger hauptsächlich eine Rutilstruktur aufweist. Eine weitere besonders bevorzugte Anwendung ist die Regeneration von Ruthenium oder Rutheniumverbindungen enthaltenden Katalysatoren, deren Träger Titandioxid, Aluminiumoxid, Zirkonoxid oder Zinndioxid oder deren Mischungen enthält. Eine bevorzugte Anwendung ist die Katalysatorregeneration im Zusammenhang mit einem aus mehreren gekoppelten Schritten bestehenden Verfahren zur Isocyanatherstellung, einschließlich katalysierter Chlorwasserstoffoxidation, dessen einzelne Prozessschritte z. B. grundsätzlich aus der EP 1867631 A1 bekannt sind.

Bevorzugt wird das neue Verfahren mit dem als Deacon-Prozess bekannten katalytischen Gasphasenoxidationsverfahren kombiniert. Hierbei wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 150 bis 500°C, der übliche Reaktionsdruck beträgt 1 bis 25 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Die katalytische Chlorwasserstoff-Oxidation kann adiabatisch oder bevorzugt isotherm oder annähernd isotherm, diskontinuierlich, bevorzugt aber kontinuierlich als Fließ- oder Festbettverfahren, bevorzugt als Festbettverfahren, besonders bevorzugt in Rohrbündelreaktoren an Heterogenkatalysatoren bei einer Reaktortemperatur von 180 bis 500°C, bevorzugt 200 bis 400°C, besonders bevorzugt 220 bis 350°C und einem Druck von 1 bis 25 bar (1000 bis 25000 hPa), bevorzugt 1,2 bis 20 bar, besonders bevorzugt 1,5 bis 17 bar und insbesondere 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff- Oxidation kann bevorzugt auch mehrstufig durchgeführt werden.

Der Umsatz an Chlorwasserstoff im einfachen Durchgang kann bevorzugt auf 15 bis 90 %, bevorzugt 40 bis 90%, besonders bevorzugt 50 bis 90% begrenzt werden. Nicht umgesetzter Chlorwasserstoff kann nach Abtrennung teilweise oder vollständig in die katalytische Chlorwasserstoff-Oxidation zurückgeführt werden.

Bei der adiabaten oder annähernd adiabaten Fahrweise können auch mehrere, also 2 bis 10, bevorzugt 2 bis 6, besonders bevorzugt 2 bis 5, insbesondere 2 bis 3, in Reihe geschaltete Reaktoren mit zusätzlicher Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden. In diesem Fall lässt sich ein bevorzugtes Reinigungsverfahren für den Katalysator besonders einfach als in situ Verfahren realisieren indem ein Reaktor der Reaktorkaskade aus dem Deacon-Verfahren genommen und der darin enthaltende Katalysator der erfindungsgemäßen Regeneration unterzogen wird.

Eine weitere bevorzugte Ausführungsform einer für das Deacon-Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußere Abmessungen haben. Geeignete bevorzugte Katalysatoren für das Deacon-Verfahren enthalten Rutheniumoxide, Rutheniumchloride oder andere Rutheniumverbindungen. Als Trägermaterialen eignen sich beispielsweise Siliziumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt $\gamma$- oder $\delta$-Aluminiumoxid oder deren Gemische. Geeignete Katalysatoren können beispielsweise durch Aufbringen von Ruthenium(III)chlorid auf den Träger und anschließendes Trocknen oder Trocknen und Calcinieren erhalten werden. Geeignete Katalysatoren können ergänzend zu einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Zur Dotierung der Katalysatoren eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formgebung des Katalysators kann nach oder bevorzugt vor der Tränkung des Trägermaterials erfolgen. Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder oder Sternstränge als Form. Die Formkörper können anschließend bei einer Temperatur von 100 bis 400°C, bevorzugt 100 bis 300°C beispielsweise unter einer Stickstoff-, Argon- oder Luftatmosphäre getrocknet und gegebenenfalls calciniert werden. Bevorzugt werden die Formkörper zunächst bei 100 bis 150°C getrocknet und anschließend bei 200 bis 400°C calciniert.

Eine weitere mögliche Anwendung ist die Regeneration eines Katalysators, der in einem Opferbett dem eigentlichen Katalysator für die Hauptreaktion insbesondere einer Deacon-Reaktion vorgeschaltet ist und diesen insbesondere vor Schwefelverbindungen aber auch vor anderen Katalysatorgiften schützt.

Die folgenden Beispiele veranschaulichen die vorliegende Erfindung:

Beispiele

Teil 1: Präparation der Katalysatoren

Um die Erfindung veranschaulichen zu können, wurden auf $SnO_2$ bzw. $TiO_2$ geträgerte, pelletierte Rutheniumträgerkatalysatoren hergestellt.

**Beispiel 1a:** 200g $SnO_2$-Pellets (kugelförmig, Durchmesser etwa 1,9 mm, Alfa Aesar) wurden mit einer Lösung aus 9,99g Rutheniumchlorid-n-Hydrat in 33,96 ml $H_2O$ imprägniert und anschließend 1h lang durchmischt. Der feuchte Feststoff wurde anschließend bei 60°C im Muffelofen (Luft) für 4h getrocknet und darauf für 16h bei 250°C calciniert.

**Beispiel 1b:** 100g $TiO_2$-Pellets (zylindrisch, Durchmesser etwa 2 mm, Länge 2 bis 10 mm, Saint-Gobain) wurden mit einer Lösung aus Rutheniumchlorid-n-Hydrat in $H_2O$ imprägniert, so dass der Ru-Gehalt 3 Gew.-% betrug. Die so erhaltenen feuchten Pellets wurden über Nacht bei 60°C getrocknet und im trockenen Zustand unter Stickstoffspülung in eine Lösung aus NaOH und 25% Hydrazinhydratlösung in Wasser eingebracht und 1h stehen gelassen. Überschüssiges Wasser wurde anschließend abgedampft. Die feuchten Pellets wurden für 2h bei 60°C getrocknet und anschließend mit 4x 300g Wasser gewaschen. Die so erhaltenen feuchten Pellets wurden im Muffelofen (Luft) für 20 min. bei 120°C getrocknet und darauf für 3h bei 350°C calciniert.

Teil 2: Vergiftung der Katalysatoren mit Schwefelverbindungen

Um die Erfindung veranschaulichen zu können, wurde ein Teil der präparierten Katalysatorpellets gezielt mit Schwefel in Form der Schwefelverbindungen COS bzw. $SO_2$ vergiftet. Die Bezeichnung der Katalysatoren nach der Vergiftung und die wichtigsten Merkmale der Vergiftungsläufe können auch der Tab. 2 entnommen werden.

**Beispiel 2a:** 5g der gemäß Beispiel 1a präparierten Katalysatorpellets wurden in einem Quarzreaktionsrohr (Durchmesser 10 mm) vorgelegt und bei 330°C für eine Stunde mit einem Gasgemisch aus 5 L/h Chlorwasserstoff, 20 L/h Sauerstoff, 25 L/h Stickstoff und 0,05 L/h COS durchströmt.

**Beispiel 2b:** 5g der gemäß Beispiel 1a präparierten Katalysatorpellets wurden in einem Quarzreaktionsrohr (Durchmesser 10 mm) vorgelegt und bei 330°C für eine Stunde mit einem Gasgemisch aus 5 L/h Chlorwasserstoff, 20 L/h Sauerstoff, 25 L/h Stickstoff und 0,05 L/h $SO_2$ durchströmt.

**Beispiel 2c:** 5g der gemäß Beispiel 1b präparierten Katalysatorpellets wurden in einem Quarzreaktionsrohr (Durchmesser 10 mm) vorgelegt und bei 330°C für eine Stunde mit einem Gasgemisch aus 5 L/h Chlorwasserstoff, 20 L/h Sauerstoff, 25 L/h Stickstoff und 0,05 L/h COS durchströmt.

**Beispiel 2d:** 5g der gemäß Beispiel 1b präparierten Katalysatorpellets wurden in einem Quarzreaktionsrohr (Durchmesser 10 mm) vorgelegt und bei 330°C für eine Stunde mit einem Gasgemisch aus 5 L/h Chlorwasserstoff, 20 L/h Sauerstoff, 25 L/h Stickstoff und 0,05 L/h $SO_2$ durchströmt.

**Tab. 1: Bezeichnung der mit Schwefel vergifteten Katalysatoren und die wichtigsten Merkmale der Vergiftungsläufe.**

| Bezeichnung der Katalysatorpellets | | Vergiftungsbedingungen | | |
| nach der Vergiftung | vor der Vergiftung | Komponente | Dauer [h] | Gasstrom [L/h] |
| --- | --- | --- | --- | --- |
| 2a | 1a | COS | 1 | 0,05 |
| 2b | 1a | $SO_2$ | 1 | 0,05 |
| 2c | 1b | COS | 1 | 0,05 |
| 2d | 1b | $SO_2$ | 1 | 0,05 |

**Beispiel 3: Intervallweise Regeneration der mit Schwefel in Form der Schwefelverbindungen COS und $SO_2$ vergiifteten Rutheniumträgerkatalysatoren ($SnO_2$-Träger)**

Die Regeneration wurde intervallweise durchgeführt, wobei die Regenerationsintervalle mit i bis v gekennzeichnet und die Prozessschritte im Folgenden beschrieben sind.

Jeweils 1g der Katalysatorpellets mit den Bezeichnungen 1a, 2a und 2b wurden in drei Quarzreaktionsrohren (Durchmesser 10 mm) vorgelegt und für 16h jeweils mit einem Gasgemisch 1 (10 L/h) zusammengesetzt aus 1 L/h Chlorwasserstoff, 4 L/h Sauerstoff, 5 L/h Stickstoff durchströmt und danach intervallweise zur Regeneration mit einem Gasgemisch 2 (6 L/h) zusammengesetzt aus 1 L/h Chlorwasserstoff und 5 L/h Stickstoff durchströmt. Nach jedem Regenerationsintervall wurde wieder auf das Gasgemisch 1 (10 L/h) umgestellt und der Produktgasstrom aller Reaktoren nach einer Einlaufzeit von etwa 1h zwei Mal für etwa 15 min. durch eine 20%-ige Kaliumiodidlösung geleitet, um den Erfolg der Regeneration zu überprüfen. Das entstandene Iod wurde anschließend mit 0,1 N Thiosulfat-Maßlösung titriert (Doppelbestimmung), um die eingeleitete Chlormenge festzustellen. Aus der dermaßen bestimmten Chlormenge wurde die Raum-Zeit-Ausbeute (RZA) gemäß der folgenden Formel bestimmt (Tab. 3a):

$$RZA = g \, (Chlor) * g^{-1} \, (Katalysator) * h^{-1} \, (Zeit).$$

**Intervall i:** Die Katalysatorpellets wurden **für 1h bei 330°C** mit dem **Gasgemisch 2 (Regeneration),** anschließend **für 2h bei 330°C** mit dem **Gasgemisch** 1 (Erfolgskontrolle) durchströmt.

**Intervall ii:** Die Katalysatorpellets wurden **für 1h bei 330°C** mit dem **Gasgemisch 2** (Regeneration), anschließend **für 2h bei 330°C** mit dem **Gasgemisch 1** (Erfolgskontrolle) durchströmt.

**Intervall iii:** Die Katalysatorpellets wurden **für 14h bei 330°C** mit dem **Gasgemisch 2 (Regeneration),** anschließend **für 2h bei 330°C** mit dem **Gasgemisch 1** (Erfolgskontrolle) durchströmt.

**Intervall iv:** Die Katalysatorpellets wurden **für 4h bei 380°C** mit dem **Gasgemisch 2 (Regeneration),** anschließend **für 3h bei 330°C** mit dem **Gasgemisch 1** (Erfolgskontrolle) durchströmt.

**Intervall v:** Die Katalysatorpellets wurden **für 14h bei 380°C** mit dem **Gasgemisch 2 (Regeneration),** anschließend **für 3h bei 330°C** mit dem **Gasgemisch** 1 (Erfolgskontrolle) durchströmt.

Im Anschluss an diese Regeneration wurden die Katalysatorpellets ausgebaut, gemörsert und der Ruthenium- und Schwefelgehalt mittels RFA bestimmt (Tab. 3b). Nach der gleichen Methode wurde auch mit einem entsprechenden Anteil der nicht regenerierten Katalysatorpellets verfahren.

**Tab. 3a: RZA der Katalysatoren (vor und) nach den einzelnen Regenerationsintervallen.**

| Intervall | RZA von 2a [g/gh] | RZA von 2b [g/gh] | RZA von 1a [g/gh] |
|---|---|---|---|
| vor i | 0,39 | 0,35 | 0,61 |
| nach i. | 0,43 | 0,385 | 0,61 |
| nach ii. | 0,435 | 0,4 | 0,605 |
| nach iii. | 0,535 | 0,495 | 0,62 |
| nach iv. | 0,62 | 0,565 | 0,635 |
| nach v. | 0,655 | 0,605 | 0,625 |

**Tab. 3b: Schwefel- und Rutheniumgehalt der Katalysatoren (vor und) nach der Regeneration (bestimmt mittels RFA).**

| | Schwefel [%] | | Ruthenium [%] | |
|---|---|---|---|---|
| | nach v | vor i | nach v | Vor i |
| 1a | 0 | 0 | 2,7 | 2,7 |
| 2a | 0,16 | 0,51 | 2,6 | 2,7 |
| 2b | 0,17 | 0,62 | 2,6 | 2,7 |

Die RZA der mit Schwefel vergifteten Katalysatoren (2a, 2b) erhöhte sich nach jedem Regenerationsintervall und war nach dem letzten Regenerationsintervall auf dem gleichen Niveau wie die des unvergifteten Referenzkatalysators (1a). Offensichtlich wurde durch die Summe aller Regenerationsintervalle der durch die Vergiftung mit Schwefel in Form von Schwefelverbindungen aufgeprägte RZA-Verlust wieder komplett wettgemacht. Der Regenerationserfolg stellte sich sowohl bei dem mit COS als auch bei dem mit $SO_2$ vergifteten Rutheniumträgerkatalysator ein. Der RZA-Zugewinn korreliert offenbar in beiden Fällen mit einer deutlichen Abnahme des Schwefelgehalts. Ein signifikanter Rutheniumverlust wurde nicht festgestellt.

**Beispiel 4: Intervallweise Regeneration von mit Schwefel in Form der Schwefelverbindungen COS und $SO_2$ vergifteten Rutheniumträgerkatalysatoren ($TiO_2$-Träger)**

Die Regeneration wurde intervallweise durchgeführt, wobei die Intervalle mit i bis iii gekennzeichnet und die Prozessschritte im Folgenden beschrieben sind.

Jeweils 1g der Katalysatorpellets mit den Bezeichnungen 1b, 2c und 2d wurden in drei Quarzreaktionsrohren (Durchmesser 10 mm) vorgelegt und für 16h jeweils mit einem Gasgemisch 1 (10 L/h) zusammengesetzt aus 1 L/h Chlorwasserstoff, 4 L/h Sauerstoff, 5 L/h Stickstoff durchströmt und danach intervallweise zur Regeneration mit einem Gasgemisch 2 (6 L/h) zusammengesetzt aus 1 L/h Chlorwasserstoff und 5 L/h Stickstoff durchströmt. Nach jedem Regenerationsintervall wurde wieder auf das Gasgemisch 1 (10 L/h) umgestellt und der Produktgasstrom aller Reaktoren nach einer Einlaufzeit von etwa 1h zwei Mal für etwa 15 min. durch eine 20%-ige Kaliumiodidlösung geleitet, um den Erfolg der Regeneration zu überprüfen. Das entstandene Iod wurde anschließend mit 0,1 N Thiosulfat-Maßlösung titriert (Doppelbestimmung), um die eingeleitete Chlormenge festzustellen. Aus der dermaßen bestimmten Chlormenge wurde die Raum-Zeit-Ausbeute (RZA) gemäß der folgenden Formel bestimmt (Tab. 4a):

$$RZA = g\ (Chlor) * g^{-1}\ (Katalysator) * h^{-1}\ (Zeit).$$

**Intervall i:** Die Katalysatorpellets wurden **für 0,5h bei 380°C** mit dem **Gasgemisch 2 (Regeneration),** anschließend **für 2h bei 330°C** mit dem **Gasgemisch 1** (Erfolgskontrolle) durchströmt.

**Intervall ii:** Die Katalysatorpellets wurden **für 2h bei 380°C** mit dem **Gasgemisch 2 (Regeneration),** anschließend **für 2h bei 330°C** mit dem **Gasgemisch 1** (Erfolgskontrolle) durchströmt.

**Intervall iii:** Die Katalysatorpellets wurden **für 14h bei 380°C** mit dem **Gasgemisch 2 (Regeneration),** anschließend **für 3h bei 330°C** mit dem **Gasgemisch 1** (Erfolgskontrolle) durchströmt.

Im Anschluss an die Regeneration wurden die Katalysatorpellets ausgebaut, gemörsert und der Ruthenium- und Schwefelgehalt mittels RFA bestimmt (Tab. 4b). Nach der gleichen Methode wurde auch mit einem entsprechenden Anteil der nicht regenerierten Katalysatorpellets verfahren.

**Tab. 4a: RZA der Katalysatoren (vor und) nach den einzelnen Regenerationsintervallen.**

| Intervall | RZA von 2c [g/gh] | RZA von 2d [g/gh] | RZA von 1b [g/gh] |
|---|---|---|---|
| vorher | 0,21 | 0,215 | 0,665 |
| i. | 0,33 | 0,31 | 0,68 |
| ii. | 0,53 | 0,55 | 0,68 |
| iii. | 0,645 | 0,695 | n.b. |

**Tab. 4b: Schwefel- und Rutheniumgehalt der Katalysatoren (vor und) nach der Regeneration (bestimmt mittels RFA).**

| | Schwefel [%] | | Ruthenium [%] | |
|---|---|---|---|---|
| | nach | vor | nach | vor |
| 2c | 0,03 | 0,20 | ~3 | ~3 |
| 2d | 0,03 | 0,26 | ~3 | ~3 |
| 1b | 0 | 0 | ~3 | ~3 |

Die RZA der mit Schwefel vergifteten Katalysatoren (2c, 2d) erhöhte sich nach jedem Regenerationsintervall und war nach dem letzten Regenerationsintervall auf dem gleichen Niveau wie die des unvergifteten Referenzkatalysators (1b). Offensichtlich wurde durch die Summe aller Regenerationsintervalle der durch die Vergiftung mit Schwefel in Form von Schwefelverbindungen aufgeprägte RZA-Verlust wieder komplett wettgemacht. Der Regenerationserfolg stellte sich wiederum sowohl bei dem mit COS als auch bei dem mit $SO_2$ vergifteten Rutheniumträgerkatalysator ein. Die Verwendung eines anderen Trägers ($TiO_2$ statt $SnO_2$) hat offensichtlich keinen negativen Einfluss auf den Regenerationserfolg. Der RZA-Zugewinn korreliert offenbar mit einer deutlichen Abnahme des Schwefelgehalts. Ein signifikanter Rutheniumverlust wurde nicht festgestellt.

**Beispiel 5: Einstufige Regeneration von mit Schwefel in Form der Schwefelverbindung $SO_2$ vergifteten Rutheniumträgerkatalysatoren ($SnO_2$-Träger)**

Katalysatorpellets (1g bzw. 0,42g) mit den Bezeichnungen 1a und 2b wurden in Quarzreaktionsrohren (Durchmesser 10 mm) vorgelegt und jeweils mit einem Gasgemisch 1 (10 L/h) zusammengesetzt aus 1 L/h Chlorwasserstoff, 4 L/h Sauerstoff, 5 L/h Stickstoff durchströmt und danach zur Regeneration für 16h bzw. 63h bei 330°C bzw. 380°C mit einem Gasgemisch 2 (6 L/h) zusammengesetzt aus 1 L/h Chlorwasserstoff und 5 L/h Stickstoff durchströmt. Nach dieser Regeneration wurde wieder auf das Gasgemisch 1 (10 L/h) umgestellt. Vor und nach dieser Regeneration wurde der Produktgasstrom aller Reaktoren zwei Mal für etwa 15 min. durch eine 20%-ige Kaliumiodidlösung geleitet, um den Erfolg der Regeneration zu überprüfen. Das entstandene Iod wurde anschließend mit 0,1 N Thiosulfat-Maßlösung titriert (Doppelbestimmung), um die eingeleitete Chlormenge festzustellen. Aus der dermaßen bestimmten Chlormenge wurde die Raum-Zeit-Ausbeute (RZA) gemäß der folgenden Formel bestimmt (Tab. 5a):

$$RZA = g\ (\text{Chlor}) * g^{-1}\ (\text{Katalysator}) * h^{-1}\ (\text{Zeit}).$$

Im Anschluss an diese Regeneration wurden die Katalysatorpellets ausgebaut, gemörsert und der Ruthenium- und Schwefelgehalt mittels RFA bestimmt (Tab. 5b). Nach der gleichen Methode wurde auch mit einem entsprechenden Anteil der nicht regenerierten Katalysatorpellets verfahren.

**Tab. 5a: RZA der Katalysatoren (vor und) nach der Regeneration.**

| | Intervall | | | RZA von 2b [g/gh] | | RZA von 1a [g/gh] |
|---|---|---|---|---|---|---|
| T]°C] | Dauer [h] | Einwaage [g] | | vor | nach | nach |
| 330 | 63 | 1 | | 0,35 | 0,49 | 0,595 |
| 380 | 14 | 1 | | 0,35 | 0,565 | 0,625 |
| 380 | 63 | 0,42 | | 0,41 | 0,84 | 0,85 |

**Tab. 5b: Schwefel- und Rutheniumgehalt der Katalysatoren (vor und) nach der Regeneration (bestimmt mittels RFA).**

| | Intervall | | | 2b: Schwefel [%] | | 2b: Ruthenium [%] | |
|---|---|---|---|---|---|---|---|
| T]°C] | Dauer [h] | Einwaage [g] | | nach | vor | nach | vor |
| 330 | 63 | 1 | | n. b. | n. b. | n. b. | n. b. |
| 380 | 14 | 1 | | 0,21 | 0,62 | 2,7 | 2,7 |
| 380 | 63 | 0,42 | | 0,17 | 0,62 | 2,4 | 2,7 |

Bei 380°C ist der RZA-Zugewinn des mit Schwefel vergifteten Katalysators (2b) nach einer Regenerationsdauer von 16h signifikant höher als bei 330°C nach einer Regenerationsdauer von 63h. Offensichtlich hat die Erhöhung der Regenerationstemperatur von 330°C auf 380°C einen erheblichen positiven Einfluss auf den Erfolg und die benötigte Dauer der Regeneration. Eine intervallweise Regeneration ist offenbar nicht notwendig, da auch nach nur einem Regenerationsintervall die RZA nahezu (16h bei 380°C) bzw. vollständig (63h bei 380°C) das Niveau des unvergifteten Referenzkatalysators (1a) erreicht. Eine sehr lange Regenerationsdauer, z.B. 63h bei 380°C, führt allerdings auch zu einem signifikanten Rutheniumverlust des Katalysators.

**Vergleichsbeispiel 6: Entwicklung der Aktivität eines mit Schwefel in Form der Schwefelverbindung $SO_2$ vergifteten Rutheniumträgerkatalysators ($SnO_2$-Träger) ohne Regeneration**

Jeweils 1g der Katalysatorpellets mit den Bezeichnungen 1a und 2a wurden in zwei Quarzreaktionsrohren (Durchmesser 10 mm) vorgelegt und für 63h bei 330°C mit dem Gasgemisch 1 (10 L/h) zusammengesetzt aus 1 L/h Chlorwasserstoff, 4 L/h Sauerstoff, 5 L/h Stickstoff durchströmt. Nach 1h und nach 62h wurde der Produktgasstrom aller Reaktoren zwei Mal für etwa 15 min. durch eine 20%-ige Kaliumiodidlösung geleitet, um die Entwicklung der RZA zu überprüfen. Das entstandene Iod wurde anschließend mit 0,1 N Thiosulfat-Maßlösung titriert (Doppelbestimmung), um die eingeleitete Chlormenge festzustellen. Aus der dermaßen bestimmten Chlormenge wurde die Raum-Zeit-Ausbeute (RZA) gemäß der folgenden Formel bestimmt (Tab. 6):

$$RZA = g\ (\text{Chlor}) * g^{-1}\ (\text{Katalysator}) * h^{-1}\ (\text{Zeit}).$$

**Tab. 6: RZA-Entwicklung der Katalysatoren ohne Regeneration.**

| Intervall | RZA von 1a [g/gh] | RZA von 2a [g/gh] |
|---|---|---|
| vor | 0,685 | 0,385 |
| nach | 0,655 | 0,405 |

Die RZA des mit Schwefel in Form von Schwefelverbindungen vergifteten Katalysators blieb konstant; unter den Bedingungen des Gasgemisches 1 (Deacon-Reaktion) ist demzufolge keine Regeneration zu verzeichnen. Oxidative Bedingungen sind offenbar für die erfindungsgemäße Regenerationsmethode ungeeignet.

**Beispiel 7: Einfluss der Regeneration von mit Schwefel in Form der Schwefelverbindung $SO_2$ vergifteten Rutheniumträgerkatalysatoren auf deren Aktivität in der CO-Oxidation**

Jeweils 0,42g der Katalysatorpellets mit den Bezeichnungen 1a, 2b und ein gemäß Beispiel 3 regenerierter Katalysator wurden in drei Quarzreaktionsrohren (Durchmesser 10 mm) vorgelegt und bei unterschiedlichen Temperaturen (200-280°C) mit einem Gasgemisch 3 (9 L/h) zusammengesetzt aus 0,25 L/h Kohlenmonoxid, 0,05 L/h Kohlendioxid, 4 L/h Sauerstoff und 4,7 L/h Stickstoff durchströmt. Nach einer Einlaufzeit von etwa 2h auf jeder Temperaturstufe wurde der Produktgasstrom aller Reaktoren für jeweils eine halbe Stunde durch eine Gasmaus (200ml) geleitet. Im Anschluss wurde die Gasmaus abgeklemmt und die Zusammensetzung des Inhalts mittels GC überprüft. Aus den bestimmten CO-/$CO_2$-Konzentrationen wurde der Umsatz gemäß der folgenden Formel berechnet (Tab. 7):

$$\text{Umsatz [\%]} = \{1 - CO_t\,[\%]\} / CO_0\,[\%]\} * 100$$

Wobei $CO_t$/$CO_{2t}$: aktuelle CO/$CO_2$-Konzentration; $CO_0$/$CO_{20}$: CO/$CO_2$-Konzentration im Feed.

Die Massenbilanz ($CO_t + CO_{2t} = CO_0 + CO_{20}$) war für alle aufgeführten Ergebnisse in guter Näherung erfüllt.

**Tab. 7: CO-Oxidation mit einem vergifteten, einem regenerierten und einem unvergifteten Katalysator.**

| Temperatur [°C] | Umsatz [%] | | |
|---|---|---|---|
| | 2b | 2b nach Regeneration gemäß Bsp. 3 | 1a |
| 200 | 43 | 65 | 70 |
| 220 | 51 | 96 | 94 |
| 250 | 75 | n.b. | 97 |
| 280 | 88 | 98 | 98 |

Während an dem mit Schwefel in Form von Schwefelverbindungen vergiftete Katalysator (2b) das CO im Feedstrom über den gesamten Temperaturbereich zwischen 200 und 280°C nur partiell zu $CO_2$ umgesetzt wird, wird sowohl von dem unvergifteten Referenzkatalysator (1a) als auch von dem gemäß Beispiel 3 regeneriertem Katalysator (2b nach Regeneration gemäß Bsp. 3) bereits bei 220°C ein nahezu vollständiger Umsatz erzielt. Das Aktivitätsverhalten des regenerierten Rutheniumträgerkatalysators ist im Rahmen der Messgenauigkeit identisch mit dem des unvergifteten Referenzkatalysators.

**Patentansprüche**

1. Verfahren zur Regeneration eines Ruthenium oder Rutheniumverbindungen enthaltenden Katalysators, der durch Schwefel in Form von Schwefelverbindungen vergiftet ist, **dadurch gekennzeichnet, dass** man den Katalysator gegebenenfalls bei erhöhter Temperatur einer Behandlung mit einem Halogenwasserstoff, insbesondere Chlorwasserstoff enthaltenden Gasstrom unter nicht oxidativen Bedingungen unterzieht.

2. Verfahren nach Anspruch 1, **dadurch gekennzeichnet, dass** die Regeneration bei einer Temperatur bis 600°C, bevorzugt von 200°C bis 500°C, besonders bevorzugt von 300°C bis 450°C durchgeführt wird.

3. Verfahren nach Anspruch 1 oder 2, **dadurch gekennzeichnet, dass** die Regeneration bei einem Druck von bis zu 20 bar, bevorzugt von bis zu 5 bar, besonders bevorzugt von bis zu 1,5 bar durchgeführt wird.

4. Verfahren nach einem der Ansprüche 1 bis 3, **dadurch gekennzeichnet, dass** die Regeneration bei einem Halogenwasserstoffgehalt von 0,1 bis 100 Vol.-%, bevorzugt 1 bis 30 Vol.-%, besonders bevorzugt 5 bis 25 Vol.-% durchgeführt wird.

5. Verfahren nach einem der Ansprüche 1 bis 4, **dadurch gekennzeichnet, dass** der Ruthenium oder Rutheniumverbindungen enthaltende Katalysator ein Katalysator auf Basis von Rutheniumhalogeniden, insbesondere Rutheniumchloriden, Rutheniumoxidhalogeniden, insbesondere Rutheniumoxidchloriden, oder Rutheniumoxiden, die einzeln oder in Mischung vorliegen, ist.

6. Verfahren nach einem der Ansprüche 1 bis 5, **dadurch gekennzeichnet, dass** die Regeneration über einen Zeitraum von 0,5 Stunden bis 100 Stunden durchgeführt wird.

7. Verfahren nach einem der Ansprüche 1 bis 6, **dadurch gekennzeichnet, dass** die Regeneration im selben Reaktionsraum erfolgt, in dem der Katalysator zur Durchführung der Reaktion benützt wird, die vom Katalysator katalysiert wird.

8. Verfahren nach Anspruch 7, **dadurch gekennzeichnet, dass** der Regenerationsgasstrom entgegen der Strömungsrichtung der Reaktionskomponenten der katalysierten Reaktion über den Katalysator geleitet wird.

9. Verfahren nach einem der Ansprüche 1 bis 8, **dadurch gekennzeichnet, dass** der Katalysator ein Katalysator für die Gasphasenoxidation von Chlorwasserstoff mit Sauerstoff ist.

10. Verfahren nach einem der Ansprüche 1 bis 9, **dadurch gekennzeichnet, dass** die Regeneration intervallweise erfolgt, wobei zwischen den Zeitintervallen der Schwefelgehalt und/oder die Aktivität des Katalysators bestimmt wird.

11. Verfahren nach einem der Ansprüche 1 bis 10, **dadurch gekennzeichnet, dass** die Schwefelverbindungen eine oder mehrere Verbindungen ausgewählt aus der Reihe: $H_2SO_4$, $H_2SO_3$, $SO_3$, $SO_2$, COS, $H_2S$, Salze von $H_2SO_4$ und $H_2SO_3$ sind.

12. Verfahren zur katalysierten Gasphasenoxidation von Chlorwasserstoff mit Sauerstoff unter Verwendung von auf Ruthenium oder Rutheniumverbindungen basierendem Katalysator, **dadurch gekennzeichnet, dass** der Katalysator
einem Regenerationsverfahren nach einem der Ansprüche 1 bis 11 unterzogen wird.

**Claims**

1. Process for regenerating a catalyst containing ruthenium or ruthenium compounds and poisoned with sulphur in the form of sulphur compounds, **characterized in that** the catalyst is subjected, optionally at elevated temperature, to a treatment with a gas stream containing hydrogen halide, in particular hydrogen chloride, under nonoxidative conditions.

2. Process according to Claim 1, **characterized in that** the regeneration is carried out at a temperature up to 600°C, preferably from 200°C to 500°C, particularly preferably from 300°C to 450°C.

3. Process according to Claim 1 or 2, **characterized in that** the regeneration is carried out at a pressure of up to 20 bar, preferably of up to 5 bar, particularly preferably of up to 1.5 bar.

4. Process according to any of Claims 1 to 3, **characterized in that** the regeneration is carried out at a hydrogen halide content of 0.1 to 100% by volume, preferably 1 to 30% by volume, particularly preferably 5 to 25% by volume.

5. Process according to any of Claims 1 to 4, **characterized in that** the catalyst containing ruthenium or ruthenium compounds is a catalyst based on ruthenium halides, in particular ruthenium chlorides, ruthenium oxyhalides, in particular ruthenium oxychlorides, or ruthenium oxides, which are present individually or as a mixture.

6. Process according to any of Claims 1 to 5, **characterized in that** the regeneration is carried out over a period of 0.5 hour to 100 hours.

7. Process according to any of Claims 1 to 6, **characterized in that** the regeneration is effected in the same reaction space in which the catalyst for carrying out the reaction catalysed by the catalyst is used.

8. Process according to Claim 7, **characterized in that** the regeneration gas stream is passed over the catalyst in a direction opposite to the direction of flow of the reaction components of the catalysed reaction.

9. Process according to any of Claims 1 to 8, **characterized in that** the catalyst is a catalyst for the gas-phase oxidation of hydrogen chloride with oxygen.

10. Process according to any of Claims 1 to 9, **characterized in that** the regeneration is effected intermittently, the sulphur content and/or the activity of the catalyst being determined between the time intervals.

11. Process according to any of Claims 1 to 10, **characterized in that** the sulphur compounds are one or more compounds selected from the series: $H_2SO_4$, $H_2SO_3$, $SO_3$, $SO_2$, COS, $H_2S$, salts of $H_2SO_4$ and $H_2SO_3$.

12. Process for the catalysed gas-phase oxidation of hydrogen chloride with oxygen using a catalyst based on ruthenium or ruthenium compounds, **characterized in that** the catalyst is subjected to a regeneration process according to any of Claims 1 to 11.

**Revendications**

1. Procédé pour la régénération d'un catalyseur contenant du ruthénium ou des composés à base de ruthénium, qui est empoisonné par du soufre sous forme de composés soufrés, **caractérisé en ce qu'**on soumet le catalyseur, le cas échéant à température augmentée, à un traitement avec un flux gazeux contenant un hydracide, en particulier du chlorure d'hydrogène dans des conditions non oxydantes.

2. Procédé selon la revendication 1, **caractérisé en ce que** la régénération est réalisée à une température de 600°C, de préférence de 200°C à 500°C, de manière particulièrement préférée de 300°C à 450°C.

3. Procédé selon la revendication 1 ou 2, **caractérisé en ce que** la régénération est réalisée à une pression allant jusqu'à 20 bars, de préférence jusqu'à 5 bars, de manière particulièrement préférée jusqu'à 1,5 bar.

4. Procédé selon l'une quelconque des revendications 1 à 3, **caractérisé en ce que** la régénération est réalisée à une teneur en hydracide de 0,1 à 100% en volume, de préférence de 1 à 30% en volume, de manière particulièrement préférée de 5 à 25% en volume.

5. Procédé selon l'une quelconque des revendications 1 à 4, **caractérisé en ce que** le catalyseur contenant du ruthénium ou des composés à base de ruthénium est un catalyseur à base d'halogénures de ruthénium, en particulier des chlorures de ruthénium, des oxydes-halogénures de ruthénium, en particulier des oxydes-chlorures de ruthénium, ou des oxydes de ruthénium, qui se trouvent seuls ou en mélange.

6. Procédé selon l'une quelconque des revendications 1 à 5, **caractérisé en ce que** la régénération est réalisée sur un laps de temps de 0,5 heure à 100 heures.

7. Procédé selon l'une quelconque des revendications 1 à 6, **caractérisé en ce que** la régénération est réalisée dans la même chambre de réaction que celle dans laquelle est utilisé le catalyseur pour la réalisation de la réaction qui est catalysée par le catalyseur.

8. Procédé selon la revendication 7, **caractérisé en ce que** le flux gazeux de régénération est guidé sur le catalyseur contre le sens d'écoulement des composants de réaction de la réaction catalysée.

9. Procédé selon l'une quelconque des revendications 1 à 8, **caractérisé en ce que** le catalyseur est un catalyseur pour l'oxydation en phase gazeuse de chlorure d'hydrogène avec de l'oxygène.

10. Procédé selon l'une quelconque des revendications 1 à 9, **caractérisé en ce que** la régénération a lieu par intervalles, la teneur en soufre et/ou l'activité du catalyseur étant déterminée entre les intervalles dans le temps.

11. Procédé selon l'une quelconque des revendications 1 à 10, **caractérisé en ce que** les composés de soufre sont un ou plusieurs composés choisis dans la série : $H_2SO_4$, $H_2SO_3$, $SO_3$, $SO_2$, COS, $H_2S$, sels de $H_2SO_4$ et de $H_2SO_3$.

12. Procédé pour l'oxydation en phase gazeuse, catalysée, de chlorure d'hydrogène avec de l'oxygène en utilisant un catalyseur à base de ruthénium ou de composés du ruthénium, **caractérisé en ce que** le catalyseur est soumis à un procédé de régénération selon l'une quelconque des revendications 1 à 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1567788
- EP 743277 A1
- DE 102006024543 A1
- US 7247592 B2
- US 7318915 B2

- WO 2007066810 A1
- GB 744049 A
- GB 1278119 A
- EP 1867631 A1

**In der Beschreibung aufgeführte Nicht-Patentliteratur**

- Ullmann Encyclopedia of industrial chemistry. 2006